# EUROPEAN PATENT SPECIFICATION

(11) **EP 0 891 649 B1**
(45) Date of publication and mention of the grant of the patent: **18.12.2002**
(21) Application number: 97916513.1
(22) Date of filing: 03.04.1997
(51) Int. Cl.: H02M 3/28

(54) **DC POWER CONVERTER**
GLEICHSTROMWANDLER
CONVERTISSEUR DE COURANT CONTINU

(30) Priority: 04.04.1996 GB 9607381
(43) Date of publication of application: 20.01.1999
(73) Proprietor: COUNCIL FOR THE CENTRAL LABORATORY OF THE RESEARCH COUNCILS, Chilton Didcot, Oxfordshire OX11 0QX (GB)
(72) Inventor: POOLE, David, Edward, Culcheth, Warrington WA3 4PD (GB)
(74) Representative: Allman, Peter John
(86) International application number: GB9700947
(87) International publication number: WO97038479

(56) References cited:
- EP-A- 0 347 322
- WO-A-86/04749
- US-A- 3 832 622
- US-A- 5 418 707

## Description

The present invention relates to a DC power converter which is suitable for producing high DC voltages.

High DC voltages are required in a number of applications, for example to power klystrons or similar devices in particle accelerators such as synchrotrons. A klystron typically requires a 50kV DC power supply. A conventional DC converter used to power a klystron comprises an array of line-commutated rectifiers. With such an arrangement the output is a DC signal on which a relatively small amplitude AC ripple voltage is superimposed. It is necessary to remove this ripple by passing the converter output through a smoothing filter which incorporates an inductor and a capacitor. When the system is operating this inductor and capacitor store energy, typically of the order of tens of kilojoules. This is not normally a problem but should an internal arc occur in the klystron, the stored energy is released.

Klystrons have a tendency to arc internally, particularly after long periods of being shut down. It is necessary to provide a fast-acting protection device to remove the high voltage generated by the stored energy in the event of an internal arc occurring. The device must remove the voltage in microseconds. This is conventionally achieved by using a fast-acting electronic "crowbar" protection device, generally in the form of a gas filled electronic tube. The power converter has to be designed to withstand frequent operations of the protection device which applies a near short circuit to the converter output. Thus the conventional techniques for dealing with internal arcing have significant implications with regard to cost and/or reliability.

It has been proposed to use a switch-mode type of power converter to avoid the problems referred to above and in particular to make the conventional crowbar circuit superfluous. A device of this kind which is suitable for use in long pulse applications is described in the proceedings "EP² Forum 95, Electrical Power Technology in European Physics Research" at CERN, Geneva, pp. B3-B8. This described device incorporates a line-commutated thyristor rectifier preceding the switch-mode stage to control the output voltage. As a result the system is complex and not readily applicable to general use.

WO 86/04749 discloses a converter comprising the features of the preamble of claim 1.

It is an object of the present invention to provide a DC power converter which obviates or mitigates the problems outlined above.

According to the present invention, there is provided a DC power converter comprising the features of claim 1. Preferred embodiments are defined in the dependent claims.

The rectified outputs may be connected in series, parallel or any other configuration suitable to a particular application. The modular nature of the system gives great flexibility in that standard sub-systems can be connected in different configurations appropriate to different applications. Furthermore, faulty sub-systems can be readily isolated and replaced.

In a series configuration, the invention provides a bank of relatively simple high frequency switch-mode inverters with their outputs combined to produce a very low ripple high voltage output requiring a minimum filter storing only a few joules, or even no filter at all if sufficient inverters are used. Furthermore the inverters can be switched off rapidly without delivering sufficient energy into a faulty load to cause damage, and the soft commutation characteristics of a resonant inverter as compared with a chopper type inverter make it easier to keep electromagnetic noise under control.

It is a feature of resonant inverters that the operating frequency varies as the output voltage and current change. Thus in order to use a bank of inverters in a multiphase arrangement so as to minimise voltage ripple, the phase relationship must be preserved despite frequency changes. This mode of operation may be achieved in accordance with the present invention by monitoring the operation of one or a master inverter, and controlling the operation of the other or slave inverters in synchronism with the operation of the master inverter such that the predetermined phase relationship is maintained. Preferably the direction of current through a reactive component of the master inverter is monitored, and a timing pulse is generated in response to detection of the reversal of the monitored current. Control pulses are then generated for controlling the operation of the inverters with each control pulse having a predetermined phase relationship to the timing pulse. For example, the control pulse applied to the master inverter must be in phase with the timing pulse, and the control pulses applied to the slave inverters may be delayed with respect to the timing pulse by multiples of the period of the timing pulse divided by the total number of inverters. The period of the timing pulse may be monitored and the duration of the inverter control pulses set so as to produce the required power output from the inverter.

A specific embodiment of the present invention will now be described, by way of example only, with reference to the accompanying drawings in which:
Figure 1 is a circuit diagram of a DC power converter in accordance with the present invention;
Figure 2 illustrates a single inverter of the power converter of Figure 1 and associated digital control and processing circuitry;
Figure 3 shows the relative timing of control pulses for the power converter of Figure 1;
Figure 4 is a block diagram showing a control signal generator of the power converter of Figure 1;
Figure 5 is a block diagram of a phase monitoring circuit of the power converter of Figure 1;
Figure 6 is a schematic representation of feedback control and computation processes implemented in the power converter of Figure 1; and
Figure 7 is a diagram of an alternative circuit configuration to that shown in Figure 1, the alternative circuit reducing AC voltages that may be generated across interwinding capacitances.

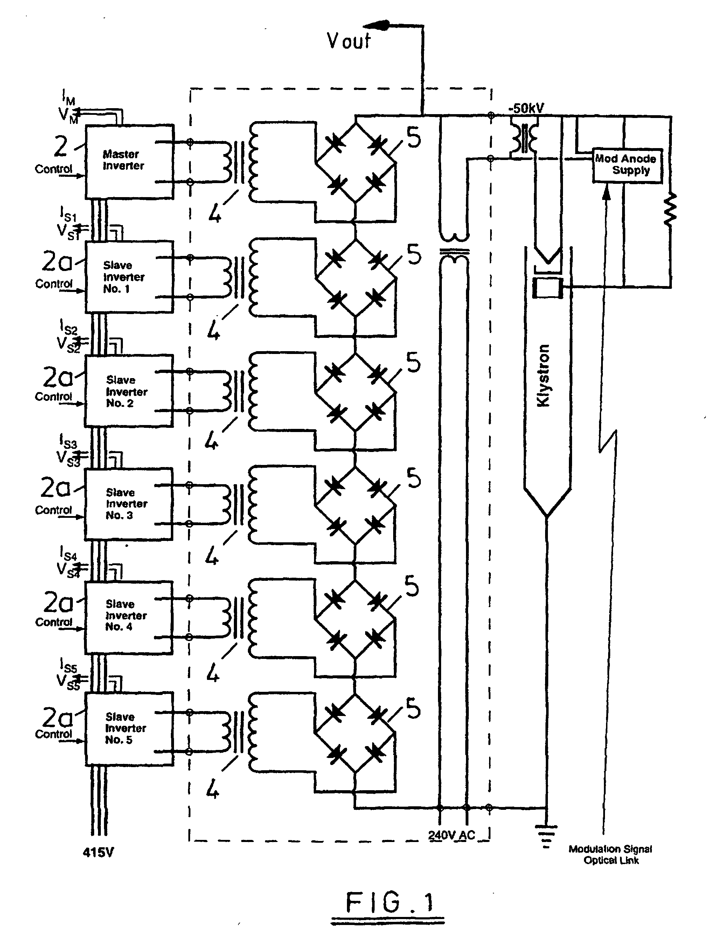

Referring now to the drawings, Figure 1 shows a circuit diagram of a DC power converter according to the present invention for converting a 415V three phase AC supply to a 50kV DC supply for a klystron 1 of a particle accelerator (not shown).

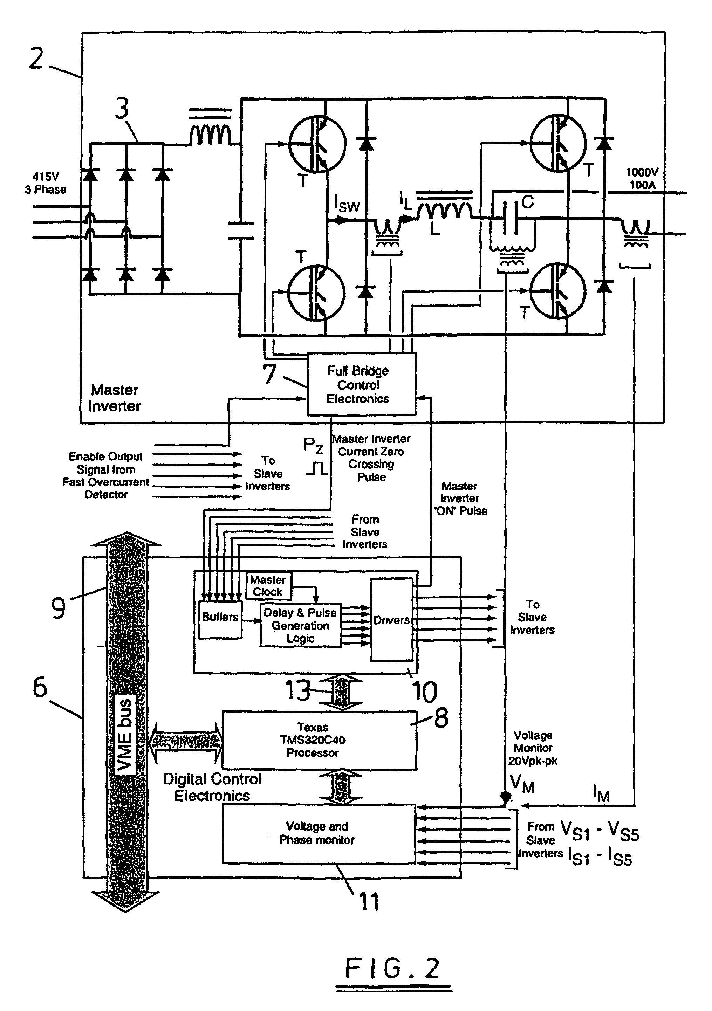

The power converter comprises a master inverter 2 and five slave inverters 2a. The six inverters 2, 2a (each including an AC to DC rectifier 3 (shown in Figure 2)) are arranged to operate in a sequence locked to the operation of the master inverter 2. The inverters 2, 2a each convert the rectified 415V AC to a high frequency AC output which is then stepped up by a respective transformer 4 and rectified to a DC voltage by a bridge rectifier 5. The final output voltage is indicated by Vₒᵤₜ and represents the sum of the voltages across the bridge rectifiers 5.

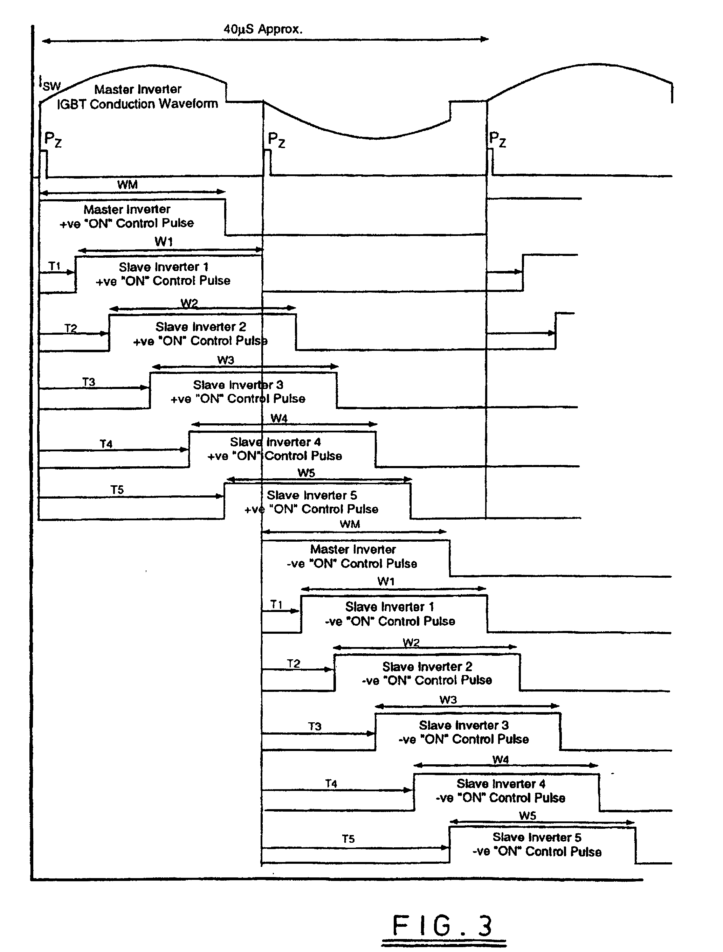

The master inverter 2 is shown in detail in Figure 2, but all the six inverters are of the same resonant switch-mode type in which current is conducted alternately in one direction and the other through an inductor L and capacitor C, the direction of conduction being governed by the operation of insulated gate bipolar transistor (IGBT) switches T. The current I_{L} in the inductor of each inverter 2,2a is thus cyclical and passes through zero once every half cycle when switching occurs. This waveform is processed by full bridge control electronics described in greater detail below to deliver a short (approximately two microseconds) pulse P_{Z} at each zero crossing. In the case of the master inverter, the pulse P_{Z} is used as the timing reference by digital control electronics shown in block form in Figure 2 to ensure that switching occurs in all the inverters in a timed relationship so that the resultant ripple in the output voltage Vₒᵤₜ is minimised. The first waveform in Figure 3 is the current I_{sw} fed into the resonant circuit by the switches T. The output voltage V_{M}, Vₛ₁₋ₛ₅ and current I_{M} , Iₛ₁₋ₛ₅ of each inverter 2, 2a is monitored by the digital control circuitry so that the required voltage and phase relationship can be established.

Referring to Figure 2, the master inverter 2 of Figure 1 is shown with associated digital control circuitry (indicated generally by reference numeral 6) which is also connected to each of the slave inverters 2a. The output of the master inverter 2 governs the operation of the slave inverters 2a. The switching of each inverter 2, 2a is controlled by a respective switching control circuit 7 which is responsive to control signals received from the digital control circuitry 6. The switching control circuit 7 of each inverter 2, 2a generates a pulse when the current I n the inductor of its resonant circuit crosses zero. These pulses are transmitted to the digital control circuit 6. The pulse P_{Z} is that generated by the master inverter 2.

The resonant inverter circuit 2 shown in Figure 2 is of conventional form and its structure and mode of operation will not therefore be described in detail in this document. It will be appreciated however that its frequency of operation will be a function of output voltage and current that will in turn be dependent upon the load.

The digital control circuit 6 comprises a fast digital signal processor 8 coupled to an external control system via, for example, a VME bus 9, a control signal generator 10 and a voltage and phase monitor circuit 11. The control signal generator 10 transmits control signals to the switching control circuit 7 of each inverter 2, 2a and receives the current zero crossing pulses P_{Z} from the master inverter 2. The voltage and phase monitor circuit 11 receives signals from each inverter 2, 2a indicative of their output voltages V_{M}, V_{S1} - V_{S5}, and their output currents I_{M}, I_{S1} - I_{S5}.

The control signal generator 10 comprises delay generation logic which is activated by receipt of the master inverter current zero crossing pulse P_{Z} and which combine to produce a control pulse of a calculated time delay t (relative to the leading edge of the pulse P_{Z}) and width w for each inverter 2, 2a. This control pulse is then transmitted to the appropriate switching control circuit 7 so that switch-on of the IGBT's of the inverter 2, 2a occurs on the leading edge of the control pulse and switch-off occurs on the trailing edge.

Figure 3 shows sets of control signal pulses generated in response to current zero crossing pulses P_{Z} of the master inverter 2 for each half cycle of the master inverter output. It will be seen that each slave inverter 2a control pulse is delayed by a time T₁ - T₅ with respect to the zero crossing pulse P_{Z} of the master inverter 2 and is of a duration that will deliver an output voltage equal to that delivered by the master inverter. In Figure 3, the period of the master inverter waveform is shown as 40µs. This period will vary as the circuitry responds to fluctuating operating condition and typically the period could range from 25 to 67µs. Figure 3 shows successive "ON" control pulses for each half cycle of the inverters separately to simplify the illustration but it will be appreciated that in practice successive control pulses may be generated by a single circuit.

If any errors were to occur in the timing of the control pulses, this could result in a power semiconductor switch T of an inverter being switched at a time when damage to the switch is likely to result. Such an occurrence can be avoided by providing each inverter with an auxiliary circuit (not shown) which inhibits switch-on if a switch control pulse arrives outside a narrow time period defined by the zero crossing pulse generated within that inverter. Thus an inverter will miss a pulse rather than switch at a time when damage might result. The back edge of the timing pulse will still terminate the power pulse to control the inverter output as described above.

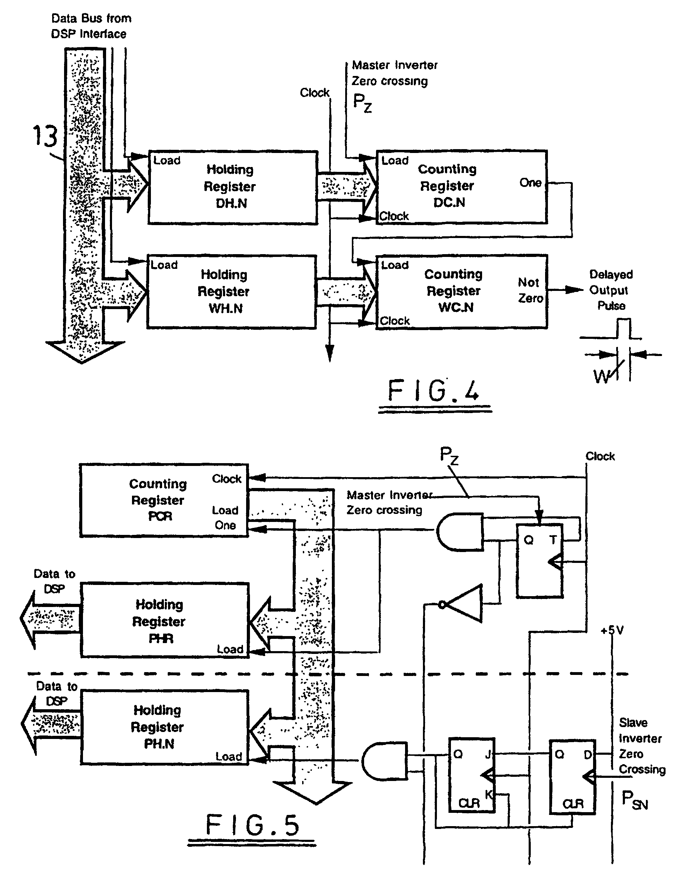

Figure 4 shows in detail the control signal generator circuit 10 for each inverter 2, 2a. It comprises a group of four registers DHN, DCN, WHN and WCN, each being 12 bits long and therefore capable of storing numbers up to 4096. Registers DHN and WHN are respectively delay hold and width hold registers connected to the signal processor 8 via a data bus 13 and which respectively feed delay and width counting registers DCN and WCN. The control signal pulse is generated at the output of the width counting register WCN.

The delay and width hold registers DHN and WHN are each loaded at any time with a number from the signal processor 8. These numbers are calculated by the signal processor 8 in response to information received from the outputs of the inverters 2, 2a and the demanded output voltage of the complete power converter. On receipt of the pulse P_{Z} which indicates that the current I_{L} in the inductor of the master inverter 2 has crossed through zero at the end of a half cycle, the number stored in delay hold register DHN is copied into delay counting register DCN. Provided this number is greater than zero, this number is decremented by one each time a pulse from a crystal controlled clock oscillator is received. Thus for a clock frequency of 100Mhz the register counts down in units of 10 nanoseconds. When the value in the delay counting register DCN reaches one, the width counting register WCN is loaded with the contents of width holding register WHN and its output changes from LOW to HIGH. The value in register WCN is then decremented in accordance with the clock pulse until the value reaches zero, whereupon its output reverts to LOW. Thus the value in the delay hold register DHN governs the delay between the zero crossing pulse P_{Z} of the master inverter 2 being detected and the output control pulse being generated, whereas the value in width hold register WHN governs the width w of that pulse. For example, if the clock frequency is 100MHz, delay hold register DHN contains 2300 and width hold register WHN contains 1550, the circuit will deliver a control pulse of 15.5 microseconds delayed by 23 microseconds each time it receives a triggering pulse P_{Z}. The control pulse is then transmitted to the switching control circuit 7 to control the switching of the respective inverter. Control pulses are generated by identical circuitry for each inverter 2, 2a.

In order to control the phase of each inverter 2, 2a, the operating frequency of the master inverter 2 is monitored and the appropriate delay between the switching of each slave inverter 2a is calculated by the signal processor 8. The calculated delay value T₁ - T₅ for each inverter 2a is loaded into the appropriate delay hold register DHN for that inverter as described above. The actual switching delay T₁ - T₅ of each slave inverter 2a is monitored (as described below) and fed to the signal processor 8 which maintains the correct phase by closed loop control.

Components of the phase monitoring part of the voltage and phase monitoring circuit 11 are shown in Figure 5. A period counting register PCR and holding register PHR monitor the master inverter, and five holding registers PHN (only one of which is shown) monitor the slave inverters. The value present in the counting register PCR is continually incremented in response to a clock pulse and the count is made available to the period count holding registers PHR and all holding registers PHN via a private data bus. Counting is performed with reference to the receipt of the current zero crossing pulse P_{Z} for the master inverter 2 and the current zero crossing pulses for the slave inverters 2a, each pulse being synchronised with the clock pulse by conventional circuitry. On receipt of the current zero crossing pulse P_{Z} of the master inverter 2 the contents of the period counting register PCR are copied to holding register PHR and a one is loaded into the reset counting register PCR to compensate for the loss of a clock count during the copying process. The value in counting register PCR is then continually incremented in response to the clock pulses until the next current zero crossing pulse P_{Z} is received half a period later, whereupon the counter is reset again. It will be understood that the value present in holding register PHR at any time reflects the half period of the master inverter output current waveform I_{M}.

Similarly, when a current zero crossing pulse is detected for each slave inverter 2a its corresponding holding register PHN is loaded with the count in counting register PCR, overwriting the previous contents. Thus each hold register PHN will contain a value reflecting the delay in the zero crossing of the respective slave inverter with reference to the zero crossing of the master inverter. The values stored in each hold register PHR, PHN are made available for transmission to the signal processor 8 every half cycle of the master inverter 2. These values can be processed by the signal processor 8 to calculate the delay time T_{N} required for each of the switching control signals.

In order to control the amplitude of the DC output voltage Vout of the power controller the voltage and phase monitoring circuit 11 receives the voltage output of a potential divider connected across the main output, and the voltage outputs V_{M}, V_{S1}-V_{S5} of each inverter 2, 2a. Each of these analogue signals is converted to digital by an analogue to digital converter ADC (not shown). The output of each ADC is in serial form, is stored in a shift register (not shown), and is read out in parallel by the digital signal processor 8. If a slave inverter should fail, the voltage and phase of the remaining inverters can be re-optimised to continue running with reduced output and slightly greater ripple until it is convenient to shut down and replace it.

Transmission of data from the holding registers to the digital signal processor 8 is achieved by using fast communication ports working in direct memory access mode. This enables the processor 8 to read the latest values of the inverter parameters without delay, enabling compensatory action to be taken where necessary. In addition, a fast overcurrent detector (not shown) is provided in the main output. In the event of an overcurrent being detected, the system is quickly shut down by removing an enable output signal from each of the bridge controls 7.

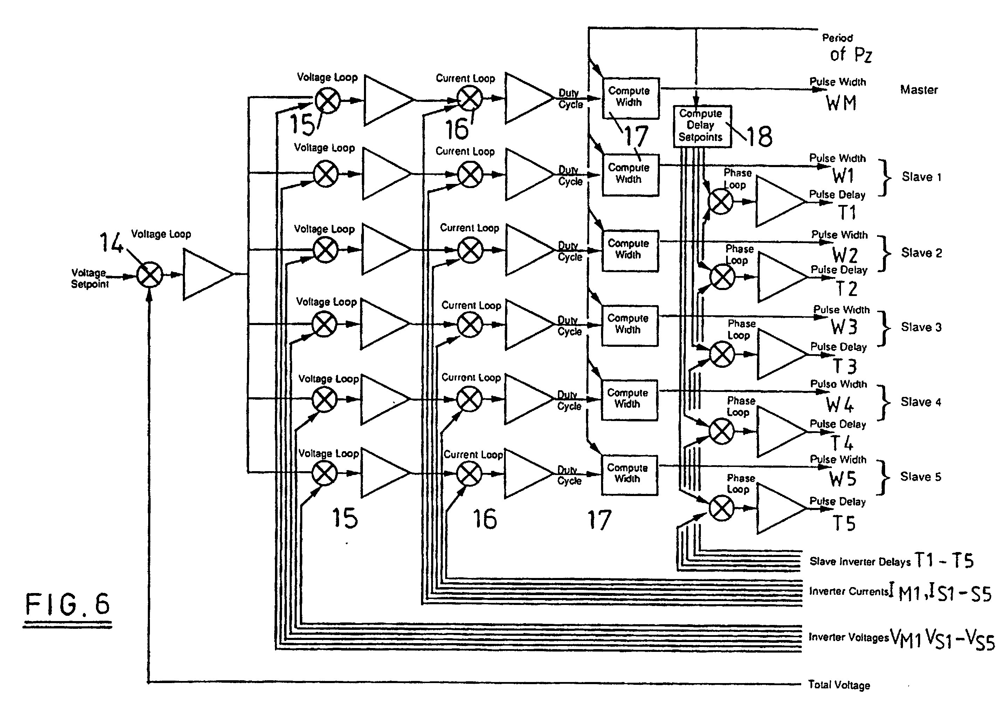

Figure 6 is a schematic representation of the feedback control loops and computational processes implemented in the described system. The total output voltage of the system as delivered to the load is compared with a "demanded" voltage represented by a voltage setpoint by a comparator 14. The resultant "difference" output is amplified to provide a signal representing a voltage demand for each of the six inverters and that signal is applied to each of the six comparators 15 which also receive respective voltage outputs V_{M}, V_{S1} - V_{S5} from the inverters. The outputs of the comparators 15 are amplified to provide signals representing current demand signals for each inverter, and those signals are applied to respective comparators 16. The comparators 16 also receive the respective inverter current signals I_{M}, I_{S1} - I_{S5}. The outputs of the comparators 16 are amplified to provide signals representing duty cycle demand signals for each inverter.

The amplified outputs of the comparators 16 and a signal representing the period of the pulse P_{Z} are used as the basis of the computation represented by boxes 17 which compute a pulse width for each inverter. The pulse period signal is also used to compute a delay setpoint for each of the slave inverters in a process represented by box 18, the delay setpoints being compared with the actual slave inverter delays T₁ - T₅ to generate a signal which is amplified to provide the required pulse delay signals for the slave inverters.

It will be appreciated that by implementing the control electronics using a field programmable gate array the power converter design may be modular in nature and can be adapted to different numbers of inverters according to the power output required.

It will be understood that by monitoring the output voltage and phase of each inverter 2, 2a the inherent variation in operating frequency of resonant inverters can be compensated for continuously so that the ripple in the high output voltage of the power converter is minimised and no subharmonics appear at any power level within the operating range. Thus an output voltage with very low ripple is produced without the need for a smoothing filter. If further reduction of the ripple is required, a filter storing only a few joules would surfice, which would be insufficient to cause arcing damage to the load. Thus, given that the resonant inverters store very little energy, the need for a protective crowbar device is eliminated.

For the Klystron application described above, the rectified outputs are connected in series to provide a high voltage output at a modest current. It is equally possible to produce a high current, low voltage power converter with low inherent ripple by connecting the rectifier outputs in parallel. Other alternatives include for example combining the outputs in a series/parallel matrix, or providing three inverters with phases of 0°, 120° and 240° with each inverter feeding a respective winding of a three phase transformer and the outputs of the transformer being applied to a three phase bridge rectifier.

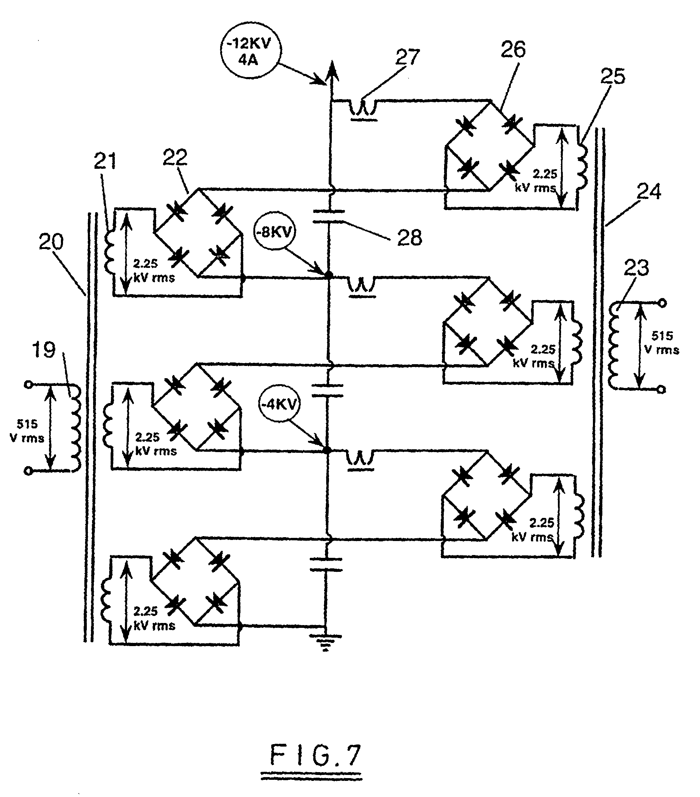

Figure 1 shows a circuit in which each inverter is coupled to a transformer 4 having a single output winding connected to a single rectifier bridge. With such a simple arrangement, given the high voltages and the frequency of operation, substantial AC voltages may be generated across small capacitances between the windings, giving rise to AC currents which may disrupt the operation of the circuit. Figure 7 shows part of an alternative circuit configuration which reduces this problem.

The circuit components shown in Figure 7 are capable of producing a 4 amp output at a voltage of 12kV. Typically an assembly of eight such circuits would be provided in a four in series, two in parallel, array to generate an 8 amp output at a voltage of 48kV. A first inverter (not shown) drives an input winding 19 of a transformer 20 having three output windings 21. Each output winding is connected to a respective bridge recitifier 22. A second inverter (not shown) drives an input winding 23 of a transformer 24 having three output windings 25. Each output winding 25 is connected to a respective bridge rectifier 26. The second inverter is phase shifted by 90° relative to the first, and the rectifiers 22, 26 are connected together in pairs. Small filters formed by components 27, 28 ensure a smooth DC output of 4kV from each of the three rectifier pairs.

## Claims

1. A DC power converter comprising a plurality of resonant inverters (2, 2a) each generating an AC output which is applied to a respective transformer (4), a rectifier circuit (5) for rectifying the outputs of the transformers (4) and combining the rectified outputs, a controller (7) for monitoring the outputs of each of the inverters and generating signals to control the phase of each of the inverters (2, 2a) such that a regular predetermined phase relationship is maintained between the inverters which maintain a stable DC output, **characterized by** means (6) for monitoring the operation of one inverter (2), and means for controlling the operation of the other inverters (2a) in synchronism with the operation of the said one inverter such that the predetermined phase relationship is maintained.

2. A DC power converter according to claim 1, wherein the rectified outputs are combined in series.

3. A DC power converter according to claim 1 or 2, comprising means for monitoring the direction of current in a reactive component of the said one inverter, means for generating a timing pulse in response to detection of the reversal of the direction of the monitored current, and means for generating control pulses for controlling the operation of the inverters, each control pulse having a predetermined phase relationship to the timing pulse.

4. A DC power converter according to claim 3, wherein each control pulse which is applied to one of the said other inverters is out of phase with the timing pulse by a multiple of the period of the timing pulse divided by the total number of inverters.

## Patentansprüche

1. Gleichstrom(DC)-Energiewandler, umfassend eine Vielzahl von Resonanz-Wechselrichtern (2, 2a), die jeweils einen Wechselstrom(AC)-Ausgang erzeugen, der an einen jeweiligen Transformator (4) angelegt wird, eine Gleichrichterschaltung (5) zum Gleichrichten der Ausgänge der Transformatoren (4) und Kombinieren der gleichgerichteten Ausgänge, einen Controller (7) zum Überwachen der Ausgänge von jedem der Wechselrichter und Erzeugen von Signalen zum Steuern der Phase von jedem der Wechselrichter (2, 2a) derart, dass eine reguläre, vorgegebene Phasenbeziehung zwischen den Wechselrichtern aufrecht erhalten wird, die einen stabilen Gleichstrom(DC)-Ausgang aufrecht erhalten, **gekennzeichnet durch** eine Einrichtung (6) zum Überwachen des Betriebs von einem Wechselrichter (2) und eine Einrichtung zum Steuern des Betriebs der anderen Wechselrichter (2a) synchron zu dem Betrieb des besagten einen Wechselrichters, so dass die vorgegebene Phasenbeziehung aufrecht erhalten wird.

2. Gleichstrom(DC)-Energiewandler nach Anspruch 1, wobei die gleichgerichteten Ausgänge in Serie kombiniert werden.

3. Gleichstrom(DC)-Energiewandler nach Anspruch 1 oder 2, umfassend eine Einrichtung zum Überwachen der Richtung eines Stroms in einer reaktiven Komponente des besagten einen Wechselrichters, eine Einrichtung zum Erzeugen eines Zeitsteuerungsimpulses im Ansprechen auf eine Erfassung der Umkehrung der Richtung des überwachten Stromes und eine Einrichtung zum Erzeugen von Steuerimpulsen zum Steuern des Betriebs der Wechselrichter, wobei jeder Steuerimpuls eine vorgegebene Phasenbeziehung zu dem Zeitsteuerungsimpuls aufweist.

4. Gleichstrom(DC)-Energiewandler nach Anspruch 3, wobei jeder Steuerimpuls, der an einen der besagten anderen Wechselrichter angelegt wird, zu dem Zeitsteuerungsimpuls um ein Vielfaches der Periode des Zeitsteuerungsimpulses, geteilt durch die Gesamtanzahl von Wechselrichtern, phasenverschoben ist.

## Revendications

1. Convertisseur de courant continu comprenant une pluralité d'inverseurs résonants (2, 2a) dont chacun génère une sortie courant alternatif qui est appliquée sur un transformateur respectif (4), un circuit de redresseur (5) pour redresser les sorties des transformateurs (4) et pour combiner les sorties redressées, un contrôleur (7) pour surveiller les sorties de chacun des inverseurs et pour générer des signaux pour commander la phase de chacun des inverseurs (2, 2a) de telle sorte qu'une relation de phase prédéterminée régulière soit maintenue entre les inverseurs qui maintiennent une sortie courant continu stable, **caractérisé par** un moyen (6) pour surveiller le fonctionnement d'un inverseur (2) et par un moyen pour commander le fonctionnement des autres inverseurs (2a) en synchronisation avec le fonctionnement dudit un inverseur de telle sorte que la relation de phase prédéterminée soit maintenue.

2. Convertisseur de courant continu selon la revendication 1, dans lequel les sorties redressées sont combinées en série.

3. Convertisseur de courant continu selon la revendication 1 ou 2, comprenant un moyen pour surveiller le sens du courant dans un composant réactif dudit un inverseur, un moyen pour générer une impulsion de cadencement en réponse à la détection de l'inversion du sens du courant surveillé et un moyen pour générer des impulsions de commande pour commander le fonctionnement des inverseurs, chaque impulsion de commande présentant une relation de phase prédéterminée par rapport à l'impulsion de cadencement.

4. Convertisseur de courant continu selon la revendication 3, dans lequel chaque impulsion de commande qui est appliquée sur l'un desdits autres inverseurs est déphasée par rapport à l'impulsion de cadencement d'un multiple de la période de l'impulsion de cadencement divisé par le nombre total d'inverseurs.
